# FASCICULE DE BREVET EUROPEEN

(11) **EP 1 852 953 B1**
(45) Date de publication et mention de la délivrance du brevet: **25.03.2009**
(21) Numéro de dépôt: 07107390.2
(22) Date de dépôt: 03.05.2007
(51) Int. Cl.: H02J 4/00, B64D 41/00, B64D 31/00

(54) **Circuit d'alimentation en énergie électrique pour des équipements électriques d'un moteur d'aéronef ou de son environnement**
Vorrichtung zur Versorgung eines Flugzeugs mit elektrischer Energie
Device for supplying electric energy to an aircraft

(30) Priorité: 05.05.2006 FR 0651638
(43) Date de publication de la demande: 07.11.2007
(73) Titulaire: HISPANO-SUIZA, 92700 Colombes (FR)
(72) Inventeur: Berenger, Serge, 94550, Chevilly Larue (FR)
(74) Mandataire: Joly, Jean-Jacques

(56) Documents cités:
- WO-A-20/06087379
- US-A- 5 233 286
- US-A- 5 929 537
- US-A1- 2006 044 722
- US-A1- 2006 061 213

## Description

### Arrière-plan de l'invention

L'invention concerne l'alimentation en énergie électrique d'un aéronef et plus particulièrement des équipements électriques d'un moteur d'aéronef et/ou de son environnement.

Des systèmes particuliers de production et distribution d'énergie électriques pour des avions sont décrits dans les documents US 5 929 537 ou WO 2006/087379 (ce dernier document n'est pas compris dans l'état de la technique).

Le domaine d'application de l'invention est plus spécifiquement celui des moteurs d'avion, notamment des moteurs à turbine à gaz. L'invention est toutefois aussi applicable à des moteurs d'hélicoptère.

Par équipements électriques d'un moteur d'aéronef ou de son environnement, on entend ici non seulement des équipements électriques utiles pour le fonctionnement même du moteur, mais aussi des équipements électriques associés à la nacelle du moteur, tels que par exemple des circuits électriques de dégivrage ou des actionneurs électromécaniques d'inverseurs de poussée pour moteurs d'avion à turbine à gaz, voire même associés à la voilure portant le moteur, tels que par exemple des circuits électriques de dégivrage ou d'antigivrage de voilure d'avion.

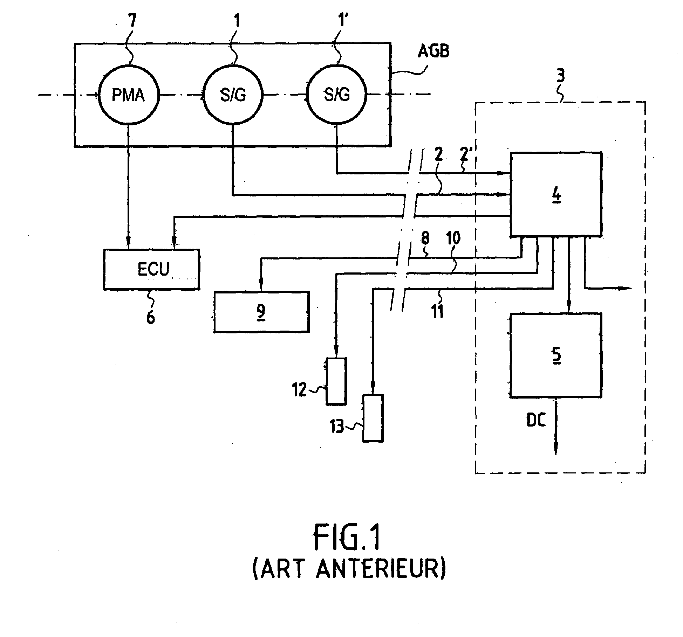

Un schéma traditionnel de production et de distribution d'énergie électrique à partir d'un moteur d'avion à turbine à gaz est montré sur la figure 1.

Deux générateurs 1, 1' (voire plus de deux à titre de redondance ou d'optimisation de la génération de puissance électrique selon l'application considérée) sont montés sur un boîtier de transmission, ou boîtier d'entraînement d'accessoires AGB ("Accessory Gear Box") qui est couplé mécaniquement à un arbre de turbine du moteur. Les générateurs sont typiquement des démarreurs/générateurs, ou S/G (pour Starter/Generator") comprenant une génératrice synchrone qui est associée à une excitatrice et qui fournit une tension alternative à fréquence variable en fonction du régime du moteur, l'ensemble excitatrice et génératrice synchrone étant commandé pour fonctionner en mode moteur synchrone au démarrage de la turbine.

Les tensions alternatives fournies par les générateurs 1, 1' sont acheminées par des lignes 2, 2' à un réseau électrique 3 de distribution d'énergie électrique à bord de l'avion, ou réseau de bord avion. Un circuit 4 du réseau de bord avion connecté aux lignes 2, 2' fournit une tension alternative régulée, typiquement 115 Vac ou 230 Vac, sur un ou plusieurs bus de distribution. Le circuit 4 alimente aussi un convertisseur de tension 5 qui fournit une tension continue régulée, typiquement 270 Vdc ou +/-270Vdc sur un ou plusieurs bus. Les tensions fournies par les circuits 4 et 5 alimentent différentes charges électriques à bord de l'avion, principalement dans la zone fuselage.

Au niveau du moteur, une unité 6 de contrôle électronique du moteur, ou ECU (pour "Engine Control Unit") est alimentée par un générateur 7 tel qu'un générateur à aimants permanents, ou PMA (pour "Permanent Magnet Alternator") monté sur le boîtier de transmission AGB. L'ECU est reliée également à l'un des bus 4, 5, par exemple le bus 4 de tension alternative régulée, pour pouvoir être alimentée correctement tant qu'un régime moteur suffisant n'a pas été atteint pour assurer la fourniture par le PMA de l'énergie électrique requise, ou en cas de défaut du PMA. L'ECU utilise l'énergie électrique reçue pour permettre le fonctionnement de ses composants et exciter différents éléments du moteur tels que des sondes ou capteurs, des actionneurs ou des servovalves requérant une puissance électrique limitée.

Il y a une tendance actuelle à substituer de plus en plus l'énergie électrique à l'énergie hydraulique pour actionner différents équipements d'un moteur d'aéronef ou de son environnement. Ainsi, certains avions sont équipés d'inverseurs de poussée à actionnement électrique de sorte qu'une ligne d'alimentation électrique 8 doit relier le réseau de bord 3 de l'avion à un tel inverseur de poussée électrique 9. Une telle ligne s'ajoute à celles nécessaires à l'alimentation d'équipements statiques, telles que des lignes 10, 11 d'alimentation de circuits 12, 13 de dégivrage de la nacelle du moteur et de la voilure portant le moteur.

L'acheminement de l'énergie électrique à partir du réseau de bord d'un aéronef vers des charges externes au fuselage par des lignes qui doivent être soigneusement sécurisées et isolées représente une masse et un encombrement importants, risquant d'être dimensionnants voire prohibitifs si le nombre d'équipements à alimenter augmente.

### Objet et résumé de l'invention

L'invention a pour but de fournir un dispositif d'alimentation en énergie électrique ne présentant pas un tel inconvénient et permettant d'alimenter un nombre élevé d'équipements électriques dans un moteur d'aéronef et/ou dans son environnement.

Ce but est atteint grâce à un dispositif d'alimentation en énergie électrique d'un aéronef comprenant :
au moins un premier générateur électrique fournissant une tension électrique en étant entraîné par un moteur de l'aéronef,
un réseau de distribution d'énergie électrique à bord de l'aéronef relié au premier générateur électrique par une ligne d'alimentation pour recevoir la tension électrique produite par le premier générateur,
au moins un deuxième générateur fournissant une tension électrique en étant entraîné par un moteur de l'aéronef, et
un réseau électrique de moteur de l'aéronef distinct du réseau de bord de l'aéronef et destiné à alimenter en énergie électrique des équipements électriques situés dans le moteur de l'aéronef et/ou dans l'environnement du moteur, le réseau électrique de moteur comportant :
   - au moins un bus de distribution de tension électrique continue pour les équipements électriques, et
   - un circuit d'alimentation ayant une première entrée reliée au réseau de bord de l'aéronef pour recevoir une tension fournie par le réseau de bord de l'aéronef, une deuxième entrée reliée au deuxième générateur pour recevoir la tension électrique fournie par le deuxième générateur, un convertisseur de tension relié à la deuxième entrée, et un circuit de commutation pour délivrer sur le bus de distribution d'énergie électrique une tension fournie à partir de celle reçue sur la première entrée ou fournie par le convertisseur, en fonction de l'amplitude de la tension fournie par le deuxième générateur électrique.

Le dispositif selon l'invention permet ainsi d'offrir un noeud de disponibilité d'énergie électrique sécurisée au niveau du moteur pour alimenter des charges intégrées au moteur ou situées à proximité, une seule liaison avec le réseau électrique de bord de l'aéronef étant suffisante pour assurer la disponibilité de l'énergie électrique sur le réseau électrique de moteur lorsque le deuxième générateur ne suffit pas à couvrir le besoin. Le deuxième générateur fournit une tension électrique régulée ou variable en fonction du régime moteur. Le deuxième générateur peut être un alternateur à aimants permanents. Le circuit d'alimentation peut comprendre en outre un convertisseur de tension relié à la première entrée pour convertir la tension fournie par le réseau de bord de l'aéronef, notamment lorsque celle-ci est une tension alternative.

Au moins un ensemble de modules avec onduleurs alimentés par le bus de distribution de tension continue peut être prévu pour délivrer une tension alternative à des équipements électriques. Le bus de distribution de tension du réseau électrique de moteur peut être un bus de distribution de tension continue régulée.

A titre de redondance ou d'optimisation de l'installation, le dispositif d'alimentation peut comporter deux deuxièmes générateurs électriques entraînés par le moteur et reliés respectivement à la deuxième entrée et à une troisième entrée du circuit d'alimentation du réseau électrique de moteur et deux bus de distribution de tension reliés à une première sortie et à une deuxième sortie du circuit d'alimentation, et le circuit d'alimentation comprend en outre un convertisseur de tension relié à la troisième entrée, les convertisseurs de tension reliés à la deuxième et à la troisième entrée étant reliés respectivement à la première sortie et à la deuxième sortie. Dans ce cas, de préférence, la première entrée est reliée aux première et deuxième sorties du circuit d'alimentation, le circuit de commutation permettant la fourniture sur le premier et le deuxième bus de distribution des tensions fournies respectivement par les convertisseurs reliés à la deuxième et à la troisième entrée, ou de la tension fournie par le premier convertisseur.

Les équipements électriques peuvent comprendre des actionneurs électromécaniques pour des géométries variables du moteur et des moteurs électriques de pompes, ainsi qu'au moins un circuit de dégivrage d'une nacelle de moteur. Dans le cas d'un moteur d'avion, les équipements électriques peuvent comprendre au moins un circuit de dégivrage de la voilure supportant le moteur, et, dans le cas d'un moteur d'avion à turbine à gaz, des actionneurs électromécaniques d'inverseur de poussée électrique.

### Brève description des dessins

L'invention sera mieux comprise à la lecture de la description faite ci-après, à titre indicatif mais non limitatif, en référence aux dessins annexés sur lesquels :
- la figure 1, déjà décrite, représente très schématiquement un schéma connu de production et la distribution d'énergie électrique dans un aéronef ;
- la figure 2 est une vue très schématique générale montrant un système pour l'alimentation électrique et la commande d'équipements d'un moteur d'aéronef et de son environnement ; et
- la figure 3 est une vue plus détaillée d'un circuit d'alimentation en tension électrique faisant partie du réseau électrique de moteur de la figure 2.

### Description détaillée des modes de réalisation de l'invention

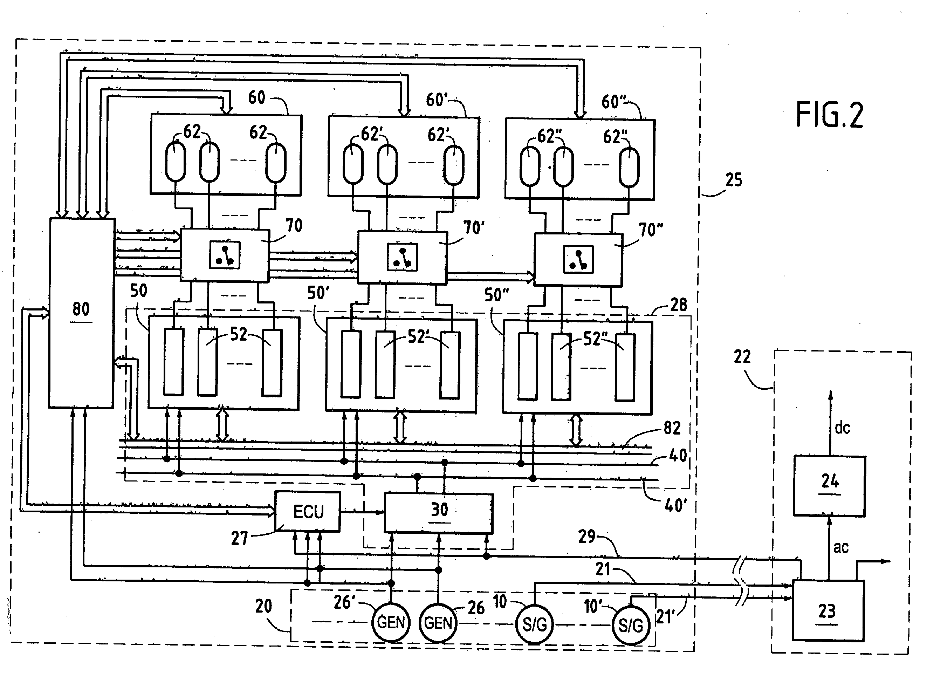

La figure 2 montre un schéma général d'un système pour l'alimentation électrique et la commande d'équipements électriques d'un moteur d'aéronef et de son environnement, notamment un moteur d'avion à turbine à gaz.

Le circuit de la figure 2 comporte, de façon connue, un ou deux premiers générateurs 10, 10', tels que des S/G montés sur un boîtier de transmission (schématisé par 20) couplé mécaniquement à un arbre de turbine du moteur. Les tensions alternatives fournies par les S/G 10 et 10' sont acheminées par des lignes 21 et 21' à un réseau électrique 22 de distribution d'énergie électrique à bord de l'avion, ou réseau électrique de bord avion. Un circuit 23 du réseau de bord avion 22 fournit sur un ou plusieurs bus de distribution une tension alternative régulée typiquement 115 Vac ou 230 Vac ayant une fréquence variable en fonction de la vitesse de rotation de l'arbre de turbine. Le circuit 23 alimente également un circuit convertisseur de tension 24 qui fournit une tension continue régulée, typiquement 270 Vdc ou ±270 Vdc sur un ou plusieurs bus. Les tensions produites par les circuits 23 et 24 alimentent différentes charges dans la zone de fuselage de l'avion.

Au niveau du moteur (schématisé par 25), deux deuxièmes générateurs (GEN), 26, 26' tels que par exemple des PMA fournissent une énergie électrique alternative régulée ou variable en fonction du régime moteur à une unité de contrôle électronique du moteur, ou ECU 27 ainsi qu'à un circuit d'alimentation sécurisée 30 faisant partie d'un réseau 28 de distribution d'énergie électrique intégré au moteur. Le réseau électrique 28, ou réseau électrique de moteur de l'aéronef, est situé au niveau du moteur et est distinct du réseau électrique 22 de bord avion. L'ECU 27 et le dispositif d'alimentation 30 sont également reliés au circuit 23 de tension alternative par une ligne 29 pour pouvoir être alimentés correctement tant qu'un régime moteur suffisant n'a pas été atteint pour assurer la fourniture de l'énergie électrique requise par les générateurs 26, 26'. L'alimentation des composants de l'ECU 27 est assurée par les générateurs.

Le circuit d'alimentation 30 fournit une tension continue sur deux bus de distribution de courant continu tels que des bus HVDC 40, 40' du réseau électrique de moteur 28 qui alimentent un système d'alimentation et de commande d'équipements électriques du moteur et/ou de son environnement.

Le système d'alimentation et de commande comprend des modules d'alimentation qui peuvent par exemple être répartis en plusieurs ensembles 50, 50', 50" associés à des groupes respectifs 60, 60', 60" d'équipements électriques 62, 62', 62" par l'intermédiaire de circuits de commutation respectifs 70, 70', 70". Les équipements électriques comprennent notamment des moteurs électriques de pompes, des actionneurs pour des géométries variables du moteur d'avion ou pour des inverseurs de poussée ou des trappes de visite à actionnement électrique, des circuits résistifs de dégivrage ou d'antigivrage, tous ces équipements faisant partie du moteur d'avion ou de son environnement (nacelle, pylône de support et voilure proche).

Les modules d'alimentation 52, 52', 52" des ensembles 50, 50', 50" ainsi que les circuits de commutation 70, 70', 70" sont commandés par un dispositif de commande comprenant une unité centrale de commande 80. Celle-ci est reliée par des ensembles de lignes 64, 64', 64" à des capteurs associés à au moins certains des équipements électriques des groupes 60, 60', 60" et est reliée en outre à l'ECU 27. L'alimentation des composants de l'unité centrale de commande 80 est assurée par les générateurs 26, 26' de la même manière que pour les composants de l'ECU 27. Les modules d'alimentation 52, 52', 52" comprennent des onduleurs pour délivrer aux équipements 62, 62', 62" des groupes 60, 60', 60" une tension alternative obtenue à partir de la tension continue délivrée par les bus 40, 40'. L'unité centrale de commande 80 commande les modules 52, 52', 52" et les circuits de commutation 70, 70', 70" pour activer chacun des équipements 62, 62', 62" en fonction d'informations reçues de l'ECU 27 et/ou de capteurs associés aux équipements. Par activation d'un équipement, on entend ici notamment l'entraînement de moteurs électriques, la mise en mouvement d'actionneurs électriques ou électromécaniques ou encore l'alimentation de circuits résistifs de chauffage.

Les modules d'alimentation de chaque ensemble sont semblables, la répartition des modules en différents ensembles et des équipements en différents groupes étant effectuée en fonction des puissances requises afin d'optimiser les tailles des onduleurs des modules d'alimentation. Le nombre d'ensembles de modules et de groupes d'équipements est de 3 dans l'exemple illustré. Il pourra bien entendu être différent de 3, voire même égal à 1 si des onduleurs sont utilisés d'une puissance convenant à tous les équipements. Chaque ensemble de modules peut comprendre au moins un module de secours à titre de redondance. Les circuits de commutation 70, 70', 70" sont commandés pour relier chaque équipement d'un groupe à un module de l'ensemble correspondant à ce groupe, éventuellement le module de secours, en cas de besoin.

D'autres systèmes d'alimentation et de commande d'équipements d'un moteur d'avion ou de son environnement pourront être conçus utilisant l'énergie fournie sur les bus 40, 40' par le circuit d'alimentation sécurisée 30. Ainsi, certains équipements au moins pourront être alimentés par la tension continue des bus 40, 40' ou une tension continue dérivée de celle-ci.

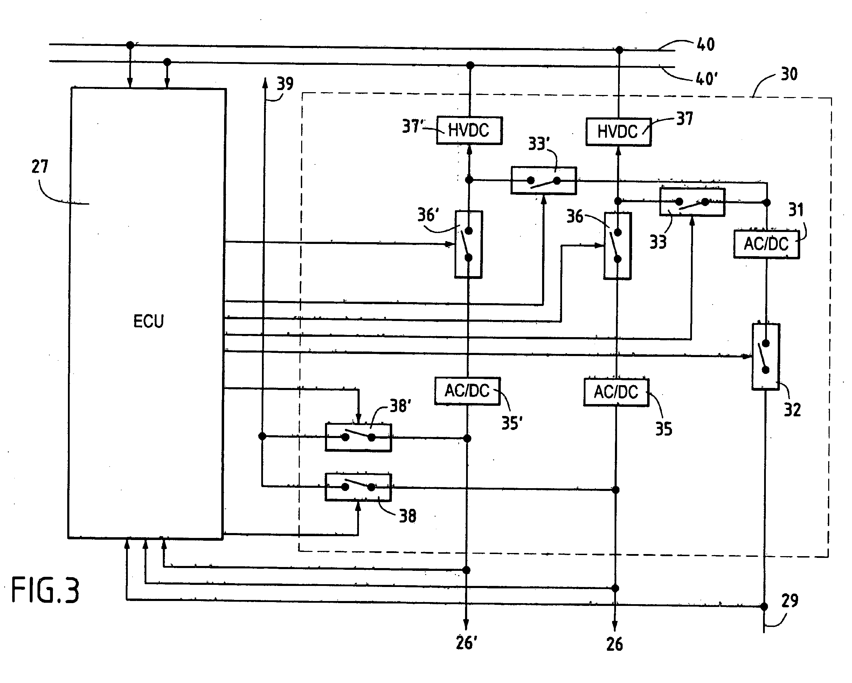

La figure 3 illustre de façon plus détaillée le circuit d'alimentation sécurisée 30. Un circuit 31 convertisseur de tension alternative en tension continue (AC/DC) a son entrée reliée par un interrupteur 32 à une première entrée du circuit 30 connectée à la ligne 16. Deux autres circuits convertisseurs AC/DC 35, 35' ont leurs entrées reliées respectivement à une deuxième et une troisième entrées du circuit 30 recevant les tensions alternatives respectives des générateurs 26, 26'. Les sorties des convertisseurs 35, 35' sont respectivement reliées par des interrupteurs 36, 36' à des circuits de bus continu 37, 37', par exemple de type HVDC alimentant respectivement les bus 40, 40'. La sortie du convertisseur 31 est reliée également aux circuits 37, 37' par l'intermédiaire d'interrupteurs respectifs 33, 33'.

Le circuit de commutation formé par les interrupteurs 32, 33, 33', 37, 37' est commandé par l'ECU 27 en fonction des niveaux de tension détectés en sortie des générateurs 26, 26'. Lorsque les générateurs fournissent une puissance électrique suffisante, les interrupteurs 36, 36' sont fermés et les interrupteurs 32, 33, 33' sont ouverts. L'énergie électrique disponible sur les bus 40, 40' est tirée de celle fournie par les générateurs 26, 26' respectivement. Lorsque l'un et/ou l'autre des générateurs 26, 26' fournit une puissance insuffisante à bas régime du moteur d'avion ou en cas de défaillance, l'ouverture de l'interrupteur 36 et/ou de l'interrupteur 36' est commandée par l'ECU 27 ainsi que concomitamment la fermeture de l'interrupteur 32 ainsi que de l'interrupteur 33 et/ou de l'interrupteur 33'. L'énergie électrique disponible sur les bus 40, 40' est alors tirée de celle fournie par l'un des générateurs et la ligne 29, ou uniquement de celle fournie par la ligne 29. On dispose donc avec le circuit d'alimentation 30 d'un noeud d'alimentation électrique sécurisée au niveau du moteur permettant la constitution d'un réseau électrique de moteur, avec les bus 40, 40', c'est-à-dire un réseau local 28 dédié au moteur et à son environnement et distinct du réseau de bord avion 22. Les bus 40, 40' alimentent les ensembles de modules 50, 50', 50" ainsi que l'unité centrale de commande 80 pour l'activation des équipements électriques 62, 62', 62". Il est toutefois possible d'alimenter un ou plusieurs équipements électriques directement à partir de la sortie des générateurs 26, 26', par exemple un circuit de dégivrage de la nacelle du moteur ou de la voilure relié à une ligne 39 qui est connectée aux sorties des générateurs 26, 26' par des interrupteurs respectifs 38, 38'. Les interrupteurs 38, 38' sont commandés par l'ECU 27 pour alimenter la ligne 39 en fonction des besoins.

L'utilisation de deux bus 40, 40' alimentés séparément permet de pallier la défaillance d'un bus ou de son alimentation, et de répartir l'énergie électrique continue distribuée.

L'utilisation de deux deuxièmes générateurs 26, 26' permet de pallier la défaillance d'un générateur tout en conservant une alimentation sécurisée par la liaison 29 avec le réseau de bord de l'avion et de répartir la puissance électrique fournie. L'utilisation d'un seul deuxième générateur alimentant les deux bus 40, 40' en parallèle est toutefois envisageable.

Il est aussi possible d'envisager la présence d'un seul bus d'alimentation alimenté en parallèle à partir de deux générateurs ou à partir d'un seul générateur et, le cas échéant, du réseau de bord de l'avion.

La tension continue fournie sur les bus 40, 40' peut être une tension régulée, par exemple à une valeur nominale de 270 Vdc ou +/- 270 Vdc, la régulation étant assurée par les circuits convertisseurs AC/DC.

En variante, la tension continue fournie sur les bus 40, 40' peut être non régulée, une plage de variation autour d'une valeur nominale étant alors tolérée, notamment en fonction des variations de tensions fournies par les générateurs 26, 26'.

Dans le mode de réalisation décrit plus haut, la tension de réseau de bord avion disponible le cas échéant pour le circuit d'alimentation 30 est une tension alternative. Cette tension pourrait être une tension continue, auquel cas une conversion AC/DC n'est pas nécessaire au niveau du circuit d'alimentation 30. Le convertisseur 31 peut alors être omis ou remplacé par un convertisseur DC/DC si la tension continue à délivrer sur les bus 40, 40' est différente de celle du réseau de bord d'avion.

Dans le mode de réalisation décrit plus haut, il en envisagé un dispositif d'alimentation en énergie électrique pour des avions équipés de moteurs à turbine à gaz. L'invention est toutefois applicable à d'autres types d'aéronefs, notamment à des hélicoptères, et à d'autres types de motorisation.

## Revendications

1. Dispositif d'alimentation en énergie électrique d'un aéronef, comprenant :
au moins un premier générateur électrique (10, 10') fournissant une tension électrique en étant entraîné par un moteur de l'aéronef,
un réseau (22) de distribution d'énergie électrique à bord de l'aéronef relié au premier générateur électrique par une ligne d'alimentation (21, 21') pour recevoir la tension électrique produite par le premier générateur (10, 10'),
au moins un deuxième générateur (26, 26') fournissant une tension électrique en étant entraîné par un moteur de l'aéronef, et
un réseau électrique (28) de moteur de l'aéronef distinct du réseau (22) de bord de l'aéronef et destiné à alimenter en énergie électrique des équipements électriques situés dans le moteur de l'aéronef et/ou dans l'environnement du moteur, le réseau électrique (28) de moteur comportant :
- au moins un bus (40 ; 40') de distribution de tension électrique continue pour les équipements électriques, et
- un circuit d'alimentation (30) ayant une première entrée reliée au réseau (22) de bord de l'aéronef pour recevoir une tension fournie par le réseau de bord de l'aéronef, une deuxième entrée reliée au deuxième générateur (26 ; 26') pour recevoir la tension électrique fournie par celui-ci, un convertisseur de tension (35 ; 35') relié à la deuxième entrée, et un circuit de commutation (32, 33, 36; 32, 33', 36') pour délivrer sur le bus de distribution d'énergie électrique une tension fournie à partir de celle reçue sur la première entrée ou fournie par le convertisseur (35 ; 35') en fonction de l'amplitude de la tension fournie par le deuxième générateur électrique (26, 26').

2. Dispositif selon la revendication 1, **caractérisé en ce que** le circuit d'alimentation (30) du réseau électrique (28) de moteur comprend en outre un convertisseur de tension (31) relié à la première entrée pour convertir la tension fournie par le réseau de bord de l'aéronef.

3. Dispositif selon l'une quelconque des revendications 1 et 2, **caractérisé en ce que** le bus de distribution de tension (40 ; 40') du réseau électrique (28) de moteur est un bus de distribution de tension continue régulée.

4. Dispositif selon l'une quelconque des revendications 1 à 3, **caractérisé en ce qu'**est prévu au moins un ensemble de modules (52 ; 52' ; 52") avec onduleurs alimentés par le bus (40; 40') de distribution de tension continue et délivrant une tension alternative à des équipements électriques (62 ; 62', 62").

5. Dispositif selon l'une quelconque des revendications 1 à 4, comprenant deux deuxièmes générateurs électriques (26, 26') entraînés par le moteur et reliés respectivement à la deuxième entrée et à une troisième entrée du circuit d'alimentation (30) et deux bus de distribution de tension (40, 40') reliés à une première sortie et à une deuxième sortie du dispositif d'alimentation, et le circuit d'alimentation (30) comprend en outre un convertisseur de tension (35') relié à la troisième entrée, les convertisseurs de tension (35, 35') reliés à la deuxième et à la troisième entrée étant reliés respectivement à la première sortie et à la deuxième sortie.

6. Dispositif selon la revendication 5, **caractérisé en ce que** la première entrée est reliée aux première et deuxième sorties du circuit d'alimentation (30), le circuit de commutation (32, 33, 36 ; 32, 33', 36') permettant la fourniture sur le premier et le deuxième bus de distribution des tensions fournies respectivement par les convertisseurs (35, 35') reliés à la deuxième et à la troisième entrée, ou d'une tension fournie à partir de celle reçue sur la première entrée.

7. Dispositif selon l'une quelconque des revendications 1 à 6, **caractérisé en ce que** le ou chaque deuxième générateur (26 ; 26') est un alternateur à aimants permanents (PMA).

8. Dispositif selon l'une quelconque des revendications 1 à 7, **caractérisé en ce que** les équipements électriques (62 ; 62' ; 62") comprennent des actionneurs électromécaniques pour des géométries variables du moteur et des moteurs électriques de pompes.

9. Dispositif selon l'une quelconque des revendications 1 à 8, **caractérisé en ce que** les équipements électriques comprennent au moins un circuit de dégivrage de nacelle du moteur.

10. Dispositif selon l'une quelconque des revendications 1 à 9 pour un moteur d'avion, **caractérisé en ce que** les équipements électriques comprennent au moins un circuit de dégivrage de voilure supportant le moteur.

11. Dispositif selon l'une quelconque des revendications 1 à 10 pour un moteur d'avion à turbine à gaz, **caractérisé en ce que** les équipements électriques comprennent des actionneurs électromécaniques d'inverseur de poussée à actionnement électrique.

## Claims

1. An arrangement for electrically powering an aircraft, the arrangement comprising:
at least one first generator (10, 10') supplying an electrical voltage on being driven by an engine of the aircraft;
an electrical power distribution network (22) on board the aircraft connected to the first generator via a power supply line (21, 21') to receive the electrical voltage produced by the first generator (10, 10');
at least one second generator (26, 26') supplying an electrical voltage on being driven by an engine of the aircraft; and
an electrical power distribution network (28) of the aircraft engine that is distinct from the on-board network (22) and that serves to supply electrical power to electrical equipment situated in the aircraft engine and/or in the environment of the engine, the engine network (28) comprising:
. at least one bus (40; 40') for distributing DC electrical voltage for the electrical equipment; and
. a power supply circuit (30) having a first input connected to the on-board network (22) to receive a voltage supplied by the on-board network, a second input connected to the second generator (26; 26') to receive the electrical voltage supplied thereby, a voltage converter (35; 35') connected to the second input, and a selector circuit (32, 33, 36; 32, 33', 36') for delivering a voltage over the distribution bus, which voltage is supplied from the voltage received on the first input, or is supplied by the converter (35; 35'), depending on the amplitude of the voltage supplied by the second generator (26, 26').

2. An arrangement according to claim 1, **characterized in that** the power supply circuit (30) of the engine network (28) further includes a voltage converter (31) connected to the first input to convert the voltage supplied by the on-board network.

3. An arrangement according to claim 1 or claim 2, **characterized in that** the voltage distribution bus (40; 40') of the engine network (28) is a regulated DC voltage distribution bus.

4. An arrangement according to any one of claims 1 to 3, **characterized in that** at least one set of modules (52; 52'; 52") is provided with inverters powered by the DC voltage distribution bus (40; 40'), and delivering an alternating voltage to the electrical equipment (62; 62'; 62").

5. An arrangement according to any one of claims 1 to 4, having two second electricity generators (26, 26') driven by the engine and respectively connected to the second input and to the third input of the power supply circuit (30), and two voltage distribution buses (40, 40') connected to a first output and to a second output of the power supply arrangement, and the power supply circuit (30) further includes a voltage converter (35') connected to the third input, the voltage converters (35, 35') connected to the second and third inputs being connected respectively to the first output and to the second output.

6. An arrangement according to claim 5, **characterized in that** the first input is connected to the first and second outputs of the power supply circuit (30), the selector circuit (32, 33, 36; 32, 33', 36') serving to supply voltages on the first and second distribution buses, which voltages are supplied respectively by the converters (35, 35') connected to the second and third inputs, or from the voltage received on the first input.

7. An arrangement according to any one of claims 1 to 6, **characterized in that** the, or each, second generator (26; 26') is a permanent magnet alternator (PMA).

8. An arrangement according to any one of claims 1 to 7, **characterized in that** the electrical equipment (62; 62'; 62") includes electromechanical actuators for parts of the engine that are of variable geometry, and electric motors for pumps.

9. An arrangement according to any one of claims 1 to 8, **characterized in that** the electrical equipment includes at least one circuit for de-icing the engine pod.

10. An arrangement according to any one of claims 1 to 9, for an airplane engine, **characterized in that** the electrical equipment includes at least one circuit for de-icing the wing supporting the engine.

11. An arrangement according to any one of claims 1 to 10, for a gas turbine airplane engine, **characterized in that** the electrical equipment includes electrically actuated electromechanical actuators of a thrust reverser.

## Patentansprüche

1. Stromversorgungsvorrichtung eines Flugzeugs, die folgendes umfaßt:
wenigstens einen ersten Stromerzeuger (10, 10'), der dadurch, daß er durch ein Triebwerk des Flugzeugs angetrieben wird, eine elektrische Spannung liefert,
ein an Bord des Flugzeugs befindliches Stromverteilernetz (22), das mit dem ersten Stromerzeuger über eine Versorgungsleitung (21, 21') verbunden ist, um die durch den ersten Stromerzeuger (10, 10') erzeugte elektrische Spannung zu erhalten,
wenigstens einen zweiten Stromerzeuger (26, 26'), der dadurch, daß er durch ein Triebwerk des Flugzeugs angetrieben wird, eine elektrische Spannung liefert, und
ein Stromnetz (28) des Triebwerks des Flugzeugs, das von dem Bordnetz (22) des Flugzeugs getrennt und dazu bestimmt ist, elektrische Einrichtungen, die sich in dem Triebwerk des Flugzeugs und/oder in der Umgebung des Triebwerks befinden, mit Strom zu versorgen, wobei das Stromnetz (28) des Triebwerks folgendes umfaßt:
- wenigstens einen Bus (40; 40') zur Verteilung elektrischer Gleichspannung für die elektrischen Einrichtungen, und
- einen Versorgungskreis (30) mit einem mit dem Bordnetz (22) des Flugzeugs verbundenen ersten Eingang, um eine durch das Bordnetz des Flugzeugs gelieferte Spannung zu empfangen, mit einem mit dem zweiten Stromerzeuger (26; 26') verbundenen zweiten Eingang, um die durch diesen gelieferte elektrische Spannung zu empfangen, mit einem mit dem zweiten Eingang verbundenen Spannungswandler (35; 35') und mit einem Schaltkreis (32, 33, 36; 32, 33', 36'), um an den Stromverteilungsbus eine Spannung zu liefern, die anhand der an dem ersten Eingang empfangenen geliefert wird oder durch den Wandler (35; 35') in Abhängigkeit der Amplitude der durch den zweiten Stromerzeuger (26, 26') gelieferten Spannung geliefert wird.

2. Vorrichtung nach Anspruch 1, **dadurch gekennzeichnet, daß** der Versorgungskreis (30) des Stromnetzes (28) des Triebwerks ferner einen mit dem ersten Eingang verbundenen Spannungswandler (31) umfaßt, um die durch das Bordnetz des Flugzeugs gelieferte Spannung umzusetzen.

3. Vorrichtung nach einem der Ansprüche 1 und 2, **dadurch gekennzeichnet, daß** der Spannungsverteilungsbus (40; 40') des Stromnetzes (28) des Triebwerks ein Bus zur Verteilung geregelter Gleichspannung ist.

4. Vorrichtung nach einem der Ansprüche 1 bis 3, **dadurch gekennzeichnet, daß** wenigstens eine Moduleinheit (52; 52'; 52") mit Wechselrichtern vorgesehen ist, die über den Bus (40; 40') zur Gleichspannungsverteilung gespeist werden und eine Wechselspannung an elektrische Einrichtungen (62; 62'; 62") liefern.

5. Vorrichtung nach einem der Ansprüche 1 bis 4, umfassend zwei zweite Stromerzeuger (26, 26'), die über das Triebwerk angetrieben werden und mit dem zweiten Eingang bzw. mit einem dritten Eingang des Versorgungskreises (30) verbunden sind, sowie zwei Spannungsverteilungsbusse (40, 40'), die mit einem ersten Ausgang und einem zweiten Ausgang der Versorgungsvorrichtung verbunden sind, und der Versorgungskreis (30) weist ferner einen mit dem dritten Eingang verbundenen Spannungswandler (35') auf, wobei die mit dem zweiten und dem dritten Eingang verbundenen Spannungswandler (35, 35') mit dem ersten Ausgang bzw. mit dem zweiten Ausgang verbunden sind.

6. Vorrichtung nach Anspruch 5, **dadurch gekennzeichnet, daß** der erste Eingang mit dem ersten und dem zweiten Ausgang des Versorgungskreises (30) verbunden ist, wobei der Schaltkreis (32, 33, 36; 32, 33', 36') ermöglicht, die Spannungen, die jeweils durch die mit dem zweiten und dem dritten Eingang verbundenen Wandler (35, 35') geliefert werden, oder eine Spannung, die anhand der an dem ersten Eingang empfangenen geliefert wird, an den ersten und den zweiten Verteilungsbus zu liefern.

7. Vorrichtung nach einem der Ansprüche 1 bis 6, **dadurch gekennzeichnet, daß** der oder jeder zweite Stromerzeuger (26; 26') ein Permanentmagnet-Wechselstromgenerator (PMA) ist.

8. Vorrichtung nach einem der Ansprüche 1 bis 7, **dadurch gekennzeichnet, daß** die elektrischen Einrichtungen (62; 62'; 62") elektromechanische Aktuatoren für veränderliche Geometrien des Triebwerks sowie Pumpen-Elektromotoren umfassen.

9. Vorrichtung nach einem der Ansprüche 1 bis 8, **dadurch gekennzeichnet, daß** die elektrischen Einrichtungen wenigstens einen Kreis zum Enteisen der Triebwerksgondel umfassen.

10. Vorrichtung nach einem der Ansprüche 1 bis 9 für ein Flugzeugtriebwerk, **dadurch gekennzeichnet, daß** die elektrischen Einrichtungen wenigstens einen Kreis zum Enteisen der das Triebwerk tragenden Tragfläche umfassen.

11. Vorrichtung nach einem der Ansprüche 1 bis 10 für ein Gasturbinenflugzeugtriebwerk, **dadurch gekennzeichnet, daß** die elektrischen Einrichtungen elektromechanische Aktuatoren einer Schubumkehrvorrichtung mit elektrischer Betätigung umfassen.
